# EUROPÄISCHE PATENTSCHRIFT

(11) **EP 1 481 200 B1**
(45) Veröffentlichungstag und Bekanntmachung des Hinweises auf die Patenterteilung: **10.12.2008**
(21) Anmeldenummer: 03706479.7
(22) Anmeldetag: 11.02.2003
(51) Int. Cl.: F24C 15/20

(54) **FILTERANORDNUNG FÜR EINE DUNSTABZUGSHAUBE**
FILTER SYSTEM FOR A RANGE HOOD
SYSTEME DE FILTRAGE POUR HOTTE ASPIRANTE

(30) Priorität: 27.02.2002 DE 10208474
(43) Veröffentlichungstag der Anmeldung: 01.12.2004
(73) Patentinhaber: BSH Bosch und Siemens Hausgeräte GmbH, 81739 München (DE)
(72) Erfinder: BÖCKLE, Martin, 75015 Bretten (DE); DITTES, Achim, 75059 Zaisenhausen (DE); FEISTHAMMEL, Egon, 76437 Rastatt (DE); GROBLEBEN, Ralf, 75015 Bretten (DE); KORNBERGER, Martin, 33611 Bielefeld (DE); REIFF, Udo, 75438 Knittlingen (DE); ROSMANN, Dieter, 70174 Stuttgart (DE); SCHMID, Dietrich, 71139 Ehningen (DE)
(86) Internationale Anmeldenummer: PCT/EP2003/001343
(87) Internationale Veröffentlichungsnummer: WO 2003/072222

(56) Entgegenhaltungen:
- EP-A- 1 134 501
- DE-A- 4 131 988
- DE-A- 10 012 889
- DE-U- 9 105 430

## Beschreibung

Die Erfindung betrifft eine Filteranordnung für Dunstabzugshauben zum Abscheiden von Partikeln und/oder Flüssigkeitströpfchen, die insbesondere in Küchen oberhalb einer Kochstelle eingesetzt werden, gemäß den Merkmalen des Oberbegriffs der Ansprüche 1 und 49.

Derartige Filteranordnungen sind bekannt. In der DE 27 20 201 C2 sowie der US-PS 39 10 782 werden Filter beschrieben, die aus einer ersten Reihe von in Abständen zueinander angeordneten und in Richtung der Gasströmung geöffneten Profilen, sowie einer zweiten Reihe von in Abständen zueinander angeordneten und entgegen der Richtung der Gasströmung geöffneten Profilen bestehen, wobei die einander benachbarten Längsränder zweier nebeneinanderliegender Profile der einen Reihe jeweils in den Innenraum eines gegenüberliegenden Profils der anderen Reihe hineinragen.

Bei diesen Abscheidegittern ist der Abstand zwischen den beiden Profilreihen so bemessen, dass die hindurchströmende Luft eine mehrfache Richtungsumkehr erfährt. Der freie Durchgangsquerschnitt beträgt je nach Abscheidegitter -Typ 10 - 30% der gesamten Gitterfläche. Durch diese Querschnittsverminderung innerhalb des Abscheidegitters tritt eine Erhöhung der Luftgeschwindigkeit auf das 3 - 10fache ein. Die abscheidende Wirkung des Gitters beruht auf dieser Geschwindigkeitserhöhung, durch die ja auch die in der Luft enthaltenden Flüssigkeitströpfchen und Feststoffpartikel beschleunigt werden, sowie auf der mehrfachen Richtungsumkehr der hindurchströmenden Luft. Die beschleunigten Flüssigkeitströpfchen und Feststoffpartikel können der Richtungsänderung nicht folgen, und prallen auf die Innenoberfläche der Profile der zweiten Reihe. Die Flüssigkeitströpfchen bilden auf deren Oberfläche einen Flüssigkeitsfilm, der allmählich nach unten ablaufen und durch spezielle Öffnungen im Rahmen des Abscheidegitters in eine unter dem Abscheidegitter angeordnete Sammelschiene gelangt.

Mit der DE 298 11 00 U1 wird ein Fettfangfilter vorgeschlagen, bei dem zwei oder mehr Lagen eines Gitters verwendet werden, welches aus nach beiden Seiten eines Bleches durch einen Stanzvorgang erzeugten Schlitzbrücken besteht, wobei die Gitter innerhalb des Filters so angeordnet sind, dass die Schlitzbrücken senkrecht oder schräg nach unten verlaufen, und die Gitter durch einen gemeinsamen Rahmen zusammengehalten werden. Jeweils zwischen zwei Gittern mit senkrecht oder schräg nach unten verlaufenden Schlitzbrücken kann sich ein weiteres Gitter befindet, dessen Schlitzbrücken waagerecht angeordnet sind.

Weiterhin sind Fettfilter aus mehrlagigem Streckmetall bekannt. So wird in der DE 197 53 687 A1 ein mehrlagiger kegelig ausgebildeter Streckmetallfilter beschrieben, der außen einen angeformten ebenen Kreisscheibenring zur guten Anlage am Filterrahmen aufweist.

Ein wesentlicher Nachteil dieser plattenförmigen oder kegelig ausgebildeten Fettfilter, bei denen die gewöhnlich von einem Gebläse angesaugte Luft die Plattenebene durchströmt, ist die reduzierte Randabsaugung.

Um diesen Nachteil zu beseitigen, wurde bereits in der DE 41 38 846 A1 vorgeschlagen, bei einer Filterkassette, über deren Filterfläche die zu filternde Luft angesaugt wird, die Filterfläche in von Luft durchströmte und die Durchströmung hemmende Teilbereiche aufzuteilen. Dabei ist im Interesse einer verbesserten Randabsaugung vorgesehen, dass die die Durchströmung hemmenden Teilbereiche zur Mitte der Filterfläche zunehmen. Nachteilig ist dabei natürlich, dass zugunsten der Strömungsoptimierung die Filterfläche insgesamt eingeschränkt wird.

Weiterhin sind aus dem Industriebereich querdurchströmte plattenförmige Abscheider für Flüssigkeiten aus einem Gasstrom, insbesondere Ölnebel, bekannt, bei denen Wirbelelemente, sog. X-förmige Wirbelelemente eingesetzt werden, die eine Umlenkung des Gasstromes und damit eine Flüssigkeitsabscheidung bewirken (DE 41 31 988 C2). Derartige querdurchströmte plattenförmige Abscheider sind für den Einsatz in gewerblichen Küchen sowie in Dunstabzugshauben für den Haushalt nicht geeignet.

Die DE-A-10012889 offenbart eine Dunstabzugshaube mit einer Absaugung an der Unterseite und am Rand der Dunstabzugshaube. Dazu sind Lüftungsschlitze von der Unterseite über die Kante der Haube weitergeführt.

Die DE-U-9105430 schlägt eine Dunstabzugshaube vor, bei der unterschiedliche Materialien für die Filterlagen eingesetzt werden können, etwa Streckmetall, Vlies oder Papier.

Aufgabe der Erfindung ist es, eine Filteranordnung zu schaffen, bei der Luft eine Filterebene durchströmt und die eine verbesserte Randabsaugung aufweist.

Gelöst wird diese Aufgabe mit den Merkmalen der unabhängigen Ansprüche 1 und 49, vorteilhafte Ausgestaltungen sind Gegenstand der Unteransprüche. Eine bevorzugte Anwendung beschreibt Anspruch 48.

Es ist vorgesehen, dass die Filteranordnung zum Abscheiden von Partikeln und/oder Flüssigkeitströpfchen aus der die Filteranordnung durchströmenden Luft aus mindestens einer in einer Ebene angeordneten Filterlage und einem Randfilter, der im Randbereich der Filterlage angeordnet ist, besteht. Der Randfilter ist erfindungsgemäß als Wirbelabscheider ausgebildet, der - im Vergleich mit der Filterlage - eine erhöhte Strömungsgeschwindigkeit und eine stärkere Verwirbelung bewirkt.

Die Filterlage 3 kann - wie aus dem Stand der Technik bekannt ist - aus einer oder mehreren Schichten aus Streckmetall und/oder Vlies und/oder Papier bestehen, wobei der Randfilter als Wirbelstromfilter, als Baffelfilter, und/oder auch als Streckmetall-, Vlies- oder Papierfilter aufgebaut sein.

Durch diese Anordnung eines Wirbelabscheiders, der quer durchströmt wird, ist eine deutlich verbesserte Randabsaugung erreichbar. Erfindungsgemäß ist dabei vorgesehen, dass der Strömungswiderstand des Randfilters geringer ist, als der Strömungswiderstand der Filterlage, denn dadurch werden Schwaden im Randbereich der Filteranordnung daran gehindert, diesen Randbereich zu verlassen. Außerdem verstärkt die aus dem kleineren Strömungswiderstand resultierende höhere Strömungsgeschwindigkeit die Verwirbelung. Dadurch werden im Randfilter, insbesondere, wenn der Randfilter als Wirbelfilter oder als Baffelfilter ausgebildet ist, die Partikel oder Flüssigkeitströpfchen besser abgeschieden.

Weiter ist der Randfilter auf dem Randbereich und bevorzugt senkrecht zur Ebene der Filterebene derart angeordnet, dass im Randfilter abgeschiedene Flüssigkeitströpfchen in den Randbereich der Filterlage fließen und dort aufgenommen werden.

Gemäß dem unabhängigen Anspruch 49 ist der Filteranordnung mindestens ein Auffangraum für das insbesondere im Randfilter abgeschiedenen Kondensat zugeordnet.

Der als Wirbelstromfilter ausgebildete Randfilter weist wenigstens eine, bevorzugt zwei hintereinander angeordnete Reihen von Einrichtungen zur Ausbildung von Wirbeln in der den Wirbelabscheider durchströmenden Luft auf. Da beispielsweise eine Dunstabzugshaube einen umlaufenden Rand aufweist, ist es vorteilhaft, wenn der gesamte Rand auch eine umlaufende Randbesaugung erhält, um Schwaden daran zu hindern, den Saugbereich der Dunstabzugshaube zu verlassen. Deshalb ist es vorteilhaft, wenn in dem Randbereich der Filterlage Randfilter umlaufend angeordnet werden.

Ist die Filterlage, die eine oder mehrere Schichten aus Streckmetall und/oder Vlies und/oder Papier aufweist, von einem u-förmigen Rahmen eingefasst, so sieht die Erfindung in einer weiteren vorteilhaften Ausbildung vor, dass der obere Rahmenschenkel verlängert ausgebildet ist, um den Randfilter aufzunehmen. Um auch hier im Randfilter abgeschiedene Flüssigkeitströpfchen ableiten zu können, weist der Rahmen in einer bevorzugten Ausführung im Bereich des auf ihm angeordneten Randfilters, Öffnungen auf.

Bewährt hat sich als Randfilter ein Wirbelabscheider, der eine Reihe von X-förmige Wirbelelementen, bevorzugt zwei hintereinander angeordnete Reihen von X-förmige Wirbelelementen besitzt. Bei zwei hintereinander angeordneten Reihen von X-förmige Wirbelelementen greifen deren gekrümmte Schenkel unter Beibehaltung eines Luftspaltes ineinander ein. Werden die so angeordneten X-förmige Wirbelelemente quer durchströmt, bilden sich Wirbel aus, so dass die in der Luft enthaltenen Partikel und /oder Flüssigkeitströpfchen gegen die Wände der Schenkel geschleudert und abgeschieden werden.

In einer weiteren vorteilhaften Ausführung ist vorgesehen, dass die Filterlage mit dem Randfilter oder die Filterlage mit dem Wirbelabscheider und dem Rahmen, einen Kassettenfilter bilden.

Die Filteranordnung an sich und insbesondere in der Ausbildung als Kassette, ist bevorzugt in der Absaugöffnung einer Dunstabzugshaube oder Esse, die über eine Luftfördereinrichtung zum Absaugen vom Luft über die Absaugöffnung verfügt, einsetzbar. Darüber hinaus kann diese Kassette austauschbar angeordnet sein und ist damit zusätzlich servicefreundlich.

Weiterhin bietet die Filteranordnung die Möglichkeit, auf dem Randfilter einen Schirm anzuordnen, der sich radial nach außen über den Rand der Filteranordnung erstreckt, um Wrasen und Dämpfe zur Filteranordnung, insbesondere zum Randfilter hin zu leiten.

In einem anderen Ausführungsbeispiel des als Randfilter ausgebildeten Wirbelabscheiders werden liegende, geschwungene Elemente verwendet, wobei die Elemente derart am Rand der Filteranordnung plaziert werden, dass der einströmenden Luft zunächst auf eine strömungstechnisch günstige Form trifft. Im weiteren Verlauf der Luft durch den Wirbelabscheider hindurch, wird sie mindestens durch ein weiteres geschwungenes Element umgelenkt.

In einer ersten Ausgestaltung des geschwungenen Elementes, ist dieses C-förmig gestaltet. Der konvexe "Rücken" der C-Form ist dem Filterrand zugeordnet. In die konkave "Öffnung" der C-Form greifen freie Schenkel eines weiteren C-förmigen, geschwungenen Elementes ein. Dadurch erfolgt eine starke Umlenkung des Luftstromes, wodurch sich Fett- oder Wassertröpfchen an der Oberfläche des Wirbelabscheiders niederschlagen.

Weitere Ausgestaltungen des geschwungenen Elementes sind V-, S-, tropfen- oder hantelförmig. Im Rahmen der Figurenbeschreibung wird darauf noch weiter eingegangen. Erfindungsgemäß kann der Wirbelabscheider auch aus einer Kombination von mindestes zwei verschiedenen Formen bestehen.

Wenn eine Vielzahl von geschwungenen Elementen montiert werden müssen, ist es nachteilig, wenn diese Elemente einzeln montiert werden müssen. Deshalb ist es vorteilhaft, wenn die geschwungenen Elemente auf einer gemeinsamen Grundplatte angeordnet sind. Diese Grundplatte kann sich sowohl oberhalb, als auch unterhalb der geschwungenen Elemente befinden. Es ist aber vorteilhaft, wenn die Grundplatte unten angeordnet ist, weil Reste des von den geschwungenen Elementen ablaufende Fett- oder Wasserkondensats auf der Grundplatte, die dann in einem Stück mit den geschwungenen Elementen einem Reinigungsprozess - beispielsweise in einem Geschirrspüler - zugeführt werden.

Es ist auch vorteilhaft, wenn die Grundplatte sich längs des Randes der Filterlage erstreckt. Durch diese Anordnung kann das vom Randfilter abgeschiedene Kondensat und Fett über die Grundplatte ablaufen und von der Filterlage aufgesogen bzw. gebunden werden. Hierbei ist es von Vorteil, wenn die Grundplatte zur Filterlage hin geneigt ist. Bei einer nicht geneigten Grundplatte läuft das Kondensat nicht zwangsläufig von dem Rand der Filteranordnung, weil der Luftstrom ständig das Kondensat zur Filtermitte hin saugt.

Die geschwungenen Elemente werden nicht nur von der einen Seite durch die Grundplatte begrenzt, sondern ihnen ist auf der anderen Seite eine weitere Platte zugeordnet. Diese zwei Platten bilden zusammen einen Kanal. Vorteilhaft ist es, wenn beide Platten - in Strömungsrichtung betrachtet - einen sich erweiternden Spalt bilden, weil dann diese Platten eine Düse ergeben. Durch diese Düsenform wird die Kondensation von Fett und Wasser verstärkt.

Vorteilhaft ist es, wenn der Wirbelabscheider mit den geschwungenen Elementen spritztechnisch hergestellt wird. Dadurch ergeben sich geringe Kosten bei der Massenproduktion trotz der komplexen Gestalt des Wirbelabscheiders. Besonders kostengünstig ist die Herstellung aus Kunststoff. Aber auch ein spritztechnisch hergestellter Wirbelabscheider aus Leichtmetall eignet sich für die Massenproduktion. Außerdem ist er gegenüber einer - gegebenenfalls aggressiven - Reinigung widerstandsfähiger als ein Wirbelabscheider aus Kunststoff. Für die Herstellung eines Wirbelabscheiders aus Leichtmetall hat sich besonders der Werkstoff Aluminium bewährt.

Wenn ein Randfilter mindestens an einer Längsseite einer Filterlage angeordnet ist, so kann der Randfilter auch zugleich diesen Teil des Filterlage-Rahmens ersetzen. Dadurch wird das Material für dieses Rahmenteil eingespart.

In einer anderen Ausgestaltung des Wirbelabscheiders, ist dieser Teil einer Dunstabzugshaube. Durch diese konstruktive Nähe zur Dunstabzugshaube, sind eine Vielzahl von Funktionen komfortabler zu gestalten. Hierauf wird im weiteren Teil der Beschreibung noch eingegangen.

Wie schon ausgeführt wurde, befindet sich der bevorzugt als Wirbelabscheider ausgebildete Randfilter im Randbereich einer Filteranordnung. Wie außerdem schon erwähnt, ist es wichtig, dass gerade der Randbereich einer Filteranordnung gut besaugt wird, damit vagabundierende Dampfschwaden nicht deren Wirkungsbereich verlassen. Deshalb ist es vorteilhaft, wenn der Randfilter über eine nach unten gerichtete Einströmöffnung verfügt.

Ein Randfilter, der exponiert den Dampfschwaden zugewandt ist, kann möglicherweise das Handling während des Kochens behindern. Deshalb ist es vorteilhaft, wenn der Randfilter ausklappbar gestaltet ist, so dass er nur bei Bedarf ausgefahren wird. Weiterhin ist vorteilhaft, wenn der Randfilter zu- bzw. abschaltbar gestaltet ist, weil bei einem geringen Aufkommen von Schwaden evtl. die Besaugung durch die mittige Filterlage ausreicht. Hierdurch können Energiekosten gespart werden. Diese Zu- und Abschaltbarkeit kann in einfacher Weise manuell erfolgen. Es ist aber auch möglich, dass sie automatisch bewerkstelligt wird. Die hierzu erforderliche Automatik wird mittels eines Sensors gesteuert, der als Drucksensor ausgebildet sein kann.

Da der Randfilter stark verschmutzen kann, ist es vorteilhaft, wenn dieser leicht demontiertbar ist. Dieses kann beispielsweise mittels einer einfachen Steck- oder Rastverbindung erfolgen.

Neben den Ausführungsformen des als Randfilter ausgebildeten Wirbelabscheiders als X-förmiges Wirbelelement oder liegenden, geschwungenen Elementen, gibt es erfindungsgemäß auch noch einen Randfilter aus Streckmetall. Streckmetall ist in vielfältigen Ausführungsformen - auch aus dem Bereich von Küchenfiltern - bekannt. Damit ein Wirbelabscheider aus Streckmetall aber die Bedingung des geringen Strömungswiderstandes für den Randbereich der Filterlage erfüllt, muss das Streckmetall hier deutlich luftdurchlässiger gestaltet werden, als eine Filterlage. Wichtig ist bei dieser Ausgestaltung, dass das Kondensat von dem Streckmetall hin zur Filterlage gelangen kann. Aus diesem Grunde ist bei einem Wirbelabscheider aus Streckmetall die Oberfläche des Streckmetalls zur Filterlage hin geneigt.

In einer Ausgestaltung der Erfindung sind das Streckmetall des Randfilters und das Streckmetall der Filterlage einstückig ausgebildet. Um die Luftdurchlässigkeit des Randfilters zu gewährleisten, besteht das Streckmetall im Bereich des Randfilters evtl. nur aus einer einzigen Lage Streckmetall.

Das Streckmetall für den Randfilter kann aber auch ein separates Bauteil sein. Dieses hat den Vorteil, dass der Randfilter ein weniger sperriges Bauteil ist und deshalb beim Reinigen leichter zu handhaben ist.

Obwohl bei einem Randfilter aus Streckmetall, keine nennenswerten Formen - wie zum Beispiel bei den geschwungenen Elementen - erforderlich sind, ist es dennoch vorteilhaft, wenn der Randfilter von einem spritztechnisch hergestellten Bauteil umgeben ist. Dieser Vorteil wird dann deutlich, wenn man beispielsweise das längliche "Gehäuse" eines Randfilters aus einen stranggepreßten Material herstellt, so ist der Querschnitt des Material über seine gesamte Länge konstant. Benötigt man beispielsweise - über die Länge des Materials betrachtet - eine lokale Materialvarianz, so ist dieses mit einem stranggepreßten Material nicht möglich. Spritztechnisch kann aber beispielsweise eine Bohrung oder eine Düsenwulst realisiert werden.

Stranggepreßte Profile, die in Längsrichtung einen Randfilter einfassen, können in einfacher Weise durch stirnseitig angebrachte Kappen in ihrer gewünschten Lage gehalten werden. Die Kappen haben hierzu, auf der den Strangpreßprofilen zugewandten Seite, entsprechende Ausnehmungen.

Gelegentlich kann es vorkommen, dass der bevorzugt aus Streckmetall hergestellte Randfilter, Kondensattropfen verliert, bevor sie auf der Filterlage angelangt sind. Hier ist es dann vorteilhaft, wenn die Einströmöffnung für die Schwaden - auf der Unterseite der Randbesaugung - mit einem innenliegenden Rand versehen ist. Dadurch können die Tropfen nicht durch die Einströmöffnung zurückfließen. Diese Berandung hat zusätzlich den Vorteil, dass dadurch die Einströmöffnung zu einer Düse wird, die die Kondensation der Schwaden begünstigt.

Der Effekt der intensiveren Randbesaugung kann noch verstärkt werden, indem man mindestens zwei Filterlagen mit mindestens je einer Randbesaugung nebeneinander anordnet. Hierdurch ergeben sich abwechselnde Felder starker und gemäßigter Besaugung.

In Bereichen starker Schwaden-Entstehung - beispielsweise in Großküchen oder bei anderweitiger intensiver Küchennutzung - kann es vorteilhaft sein, wenn wegen der vermehrten Kondensatbildung eine Auffangrinne in der Dunstabzugshaube vorgesehen ist. Das aufgefangene Kondensat kann dann entweder bei einem geringerem Kondensat-Aufkommen wieder verdunsten oder es wird mittels einer Entleerungsmöglichkeit abgelassen.

Die erfindungsgemäße Filteranordnung soll anhand der Zeichnungen erläutert werden. Es zeigen:
- Figur 1: eine Filteranordnung, die als Kassettenfilter ausgeführt wurde;
- Figur 2: eine Anordnung eines Randfilters in Form eines Wirbelabschei- ders;
- Figur 3: einen Rahmen mit einer Filterlage und Wirbelabscheidern;
- Figur 4a - 4e: verschiedene Grundformen des Wirbelabscheiders in Form von geschwungenen Elementen;
- Figur 5: eine Dunstabzugshaube mit einem entnommenen Wirbelabschei- der mit C-förmigen Elementen;
- Figur 6: einen Ausschnitt aus einem Wirbelabscheider mit C-förmigen E- lementen;
- Figur 7: einen Teilquerschnitt durch einen Randfilter mit einer Luftzufüh- rungseinrichtung;
- Figur 8: einen Kassettenfilter mit einem Wirbelabscheider mit C-förmigen Elementen;
- Figur 9: einen Querschnitt zu Figur 8;
- Figur 10: einen Querschnitt durch einen Randfilter aus Streckmetall;
- Figur 11: einen Kassettenfilter mit einem Randfilter-Gehäuse aus Strangpreßprofil;
- Figur 12: einen Querschnitt zu Figur 11 (montierter Zustand);
- Figur 13: eine Dunstabzugshaube mit mehreren nebeneinander angeordne- ten Filteranordnungen.

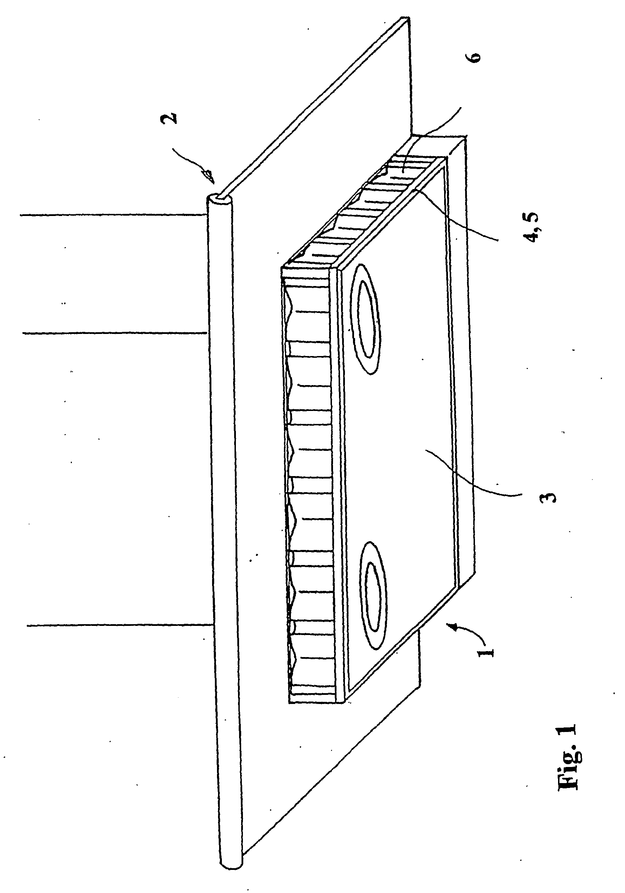

Figur 1 zeigt die Filteranordnung 1 zum Abscheiden von Partikeln und/oder Flüssigkeitströpfchen aus der die Filteranordnung 1 durchströmenden Luft mit mindestens einer in einer Ebene angeordneten Filterlage 3 und einem als Wirbelabscheider 6 ausgebildeten Randfilter, der im Randbereich 4 der Filterlage 3 umlaufend angeordnet ist. Die Filteranordnung 1 ist hier als ein Kassettenfilter ausgebildet. Die Filterlage 3 ist von einem u-förmigen Rahmen 5 eingefasst, auf dem ein Wirbelabscheider 6 angeordnet ist. Die Filteranordnung 1 befindet sich unterhalb einer Dunstabzugshaube 2.

Die Filteranordnung 1 ist so ausgelegt, dass der Strömungswiderstand des als Randfilter ausgebildeten Wirbelabscheiders 6 geringer ist als der Strömungswiderstand der Filterlage 3, wodurch eine gute Randabsaugung erreicht wird.

Dies wird zusätzlich unterstützt durch den auf dem Wirbelabscheider 6 angeordneten Schirm, der sich radial nach außen über den Rand der Filteranordnung 1 erstreckt und Wrasen und Dämpfe zur Filteranordnung 1, insbesondere zum Wirbelabscheider 6, hin leitet.

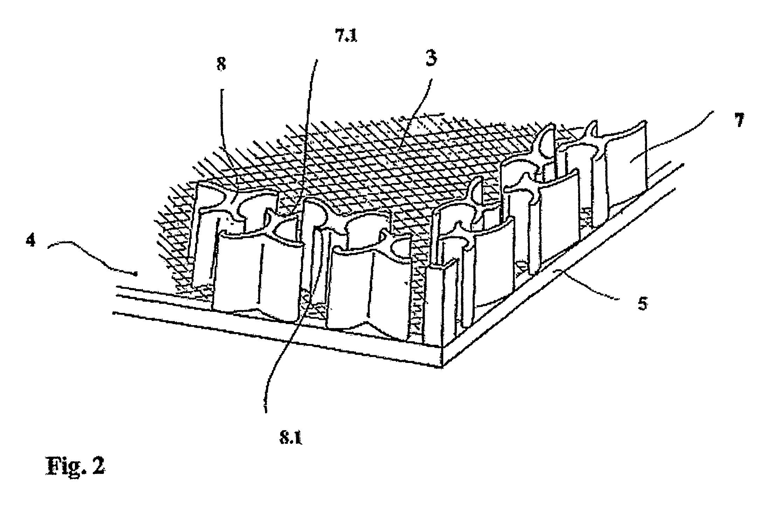

In Fig. 2 wird gezeigt, dass der Wirbelabscheider 6 aus zwei hintereinander angeordneten Reihen von X-förmige Wirbelelementen 7, 8 besteht, wobei die inneren Schenkel 7.1, 8.1 der beiden Reihen von X-förmige Wirbelelementen, 7, 8 unter Beibehaltung eines Luftspaltes, ineinander greifen, so dass die X-förmige Wirbelelemente von der angesaugten Luft quer durchströmt werden. Dabei bilden sich Wirbel aus, so dass die in der Luft enthaltenen Partikel und /oder Flüssigkeitströpfchen gegen eine Wand der Schenkel 7.1, 8.1 geschleudert und damit abgeschieden werden.

Die den Wirbelabscheider 6 bildenden Reihen von X-förmige Wirbelelementen 7, 8 sind auf dem Randbereich 4 und senkrecht zur Ebene der Filterlage 3 derart angeordnet, dass abgeschiedene Flüssigkeitströpfchen in den Randbereich 4 der Filterlage 3 fließen und dort aufgenommen werden können.

In der dargestellten Ausführung der Figur 2 ist die Filterlage von einem u-förmigen Rahmen 5 eingefasst. Die X-förmige Wirbelelemente 7 sind derart angeordnet, daß deren äußere Schenkel mit der vorderen Kante des Rahmens abschließen. An den Außenflächen der X-förmige Wirbelelemente 7, die zum Rand der Filteranordnung 1 weisen, kann sich aber ebenfalls Kondensat niederschlagen. Damit dieses Kondensat nicht über den Rand des Rahmens 5 abtropft, ist es vorteilhaft, wenn der Rahmen 5 Ablaufelemente aufweist, die das Kondensat zur Filterlage weiterleiten.

Wenn die X-förmige Wirbelelemente 7, 8 ohne Fixierung lediglich auf die Filterlage 3 gestellt werden, so könnten sie verrutschen und der Spalt zwischen ihren Schenkeln 7.1 und 8.1 hätte eine undefinierte Geometrie. Deshalb ist es vorteilhaft, dass der Rahmen 5 zu den X-förmige Wirbelelemente 7, 8 benachbart ist und deshalb die Möglichkeit bietet, die X-förmige Wirbelelemente 7, 8 mit dem Rahmen 5 zu verbinden. Dies geschieht vorteilhafterweise durch ein Verschrauben.

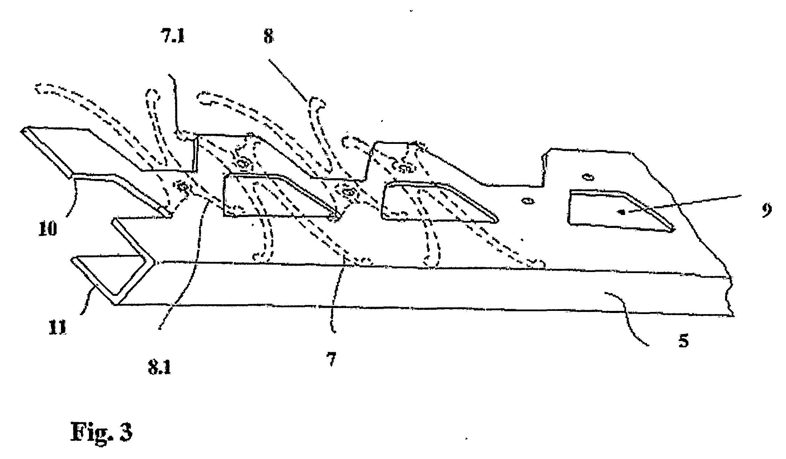

Fig. 3 zeigt einen Abschnitt des u-förmigen Rahmens 5 mit einem unteren Rahmenschenkel 11 und einem oberen. Rahmenschenkel 10, wobei der obere Rahmenschenkel 10 verlängert ausgebildet ist, um die X-förmige Wirbelelemente 7, 8 aufzunehmen. Ist kein Rahmen 5 vorhanden, so können bei einer ausreichenden Festigkeit der Filterlage 3, die X-förmige Wirbelelemente 7, 8 auch 6 direkt mit der Filterlage 3 verschraubt werden.

Weiterhin wird gezeigt, dass der Rahmen 5 im Bereich der auf ihm angeordneten X-förmige Wirbelelemente 7, 8 Öffnungen 9 zum Ableiten der von den X-förmige Wirbelelementen 7, 8 ablaufenden Flüssigkeit besitzt.

Die vorgeschlagene Filteranordnung 1 eignet sich besonders gut zum Abscheiden von Fett und Fetttröpfchen beziehungsweise von Wasser und Wassertröpfchen aus der die Filteranordnung 1 durchströmenden Luft, ist aber nicht darauf beschränkt.

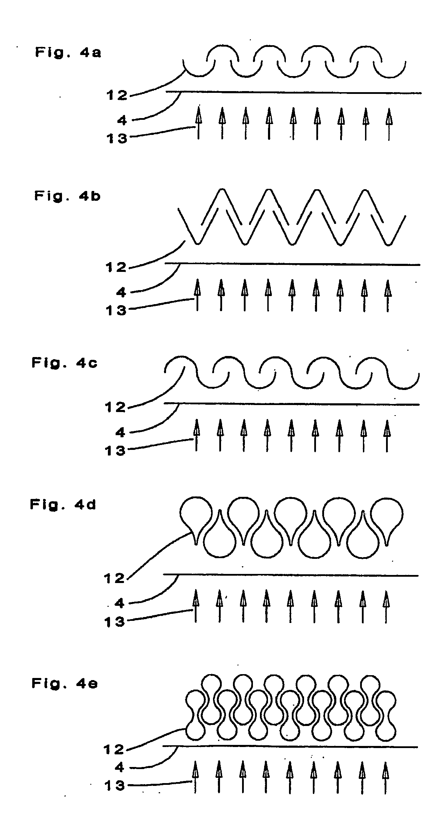

In den Figuren 4a bis 4e werden verschiedene Formen von so genannten "liegenden, geschwungenen" Elementen 12 in der Draufsicht gezeigt. Diese Elemente verkörpern ein wichtiges Bauteil bei einer Bauform des als Randfilter fungierenden Wirbelabscheiders 6. Wenn angesaugte Luft 13 eine Dunstabzugshaube 2 im Randbereich 4 betritt, dann stößt sie auf die nach außen hin gerichtete, strömungstechnisch günstige, Form (abgerundet oder spitz) der Elemente. Der Strömungswiderstand ist deshalb gering und das Absaugen der Schwaden wird dadurch nur unwesentlich behindert. Im weiteren Verlauf der Luft trifft sie auf mindestens ein weiteres Element 12. Durch den verschlungenen Weg zwischen den Elementen 12 kommt es zu einer starken Umlenkung der Teil-Luftströme. In dem Luftstrom befindliche Fett- oder Wassertröpfchen werden an den Wandungen der Elemente an die Wandung der Elemente 12 geschleudert und dadurch abgelagert. Den dargestellten Elementen der Figuren 4a bis 4e ist gemeinsam, daß immer zwei gleich geformte Elemente 12 (wenn auch teilweise mit einer entgegengesetzten Orientierung) bei der Luftumlenkung und dem Abscheiden zusammenwirken. Dieses muss nicht unbedingt so sein, jedoch zeigen diese beispielsweise ausgewählten Elemente-Formen, eine derartige Formentsprechung, so dass sie miteinander enge und stark umlenkende Kanäle bilden.

Die Elemente der Figur 4a können C- oder auch U-förmig genannt werden. In der Figur 4b sind V-förmige Elemente 12 zu sehen. Bei dem Ausführungsbeispiel der Figur 4c handelt es sich um S- oder wellenförmige Elemente 12. Die Elemente 12 der Figuren 4d (Tropfenform) und 4e (Hantelform) stellen volumige Elemente dar. Aus Gründen der Materialersparnis können diese Elemente aber auch innen hohl ausgebildet werden. Die Gefahr einer Kondensatablagerung in diesen Hohlräumen ist nicht gegeben, wenn durch eine abdeckende Platte - die dann zugleich ein Luftleitelement ist - die Hohlräume verschlossen sind.

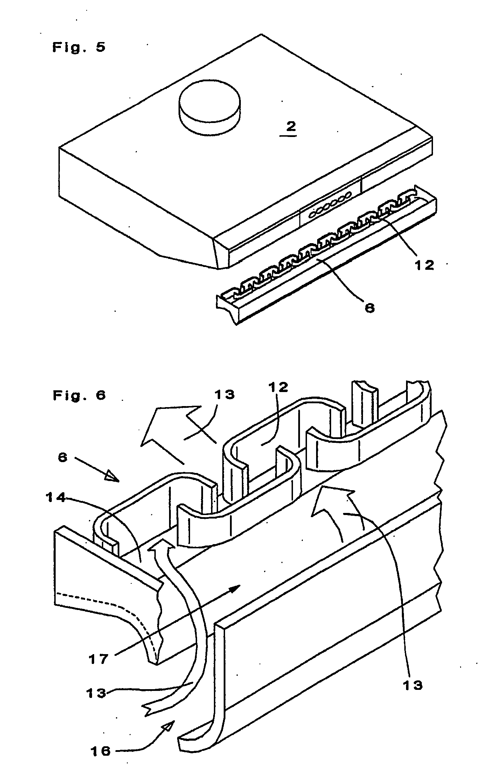

Die Figur 5 zeigt eine Dunstabzugshaube 2 mit einem an der Vorderseite - der nicht dargestellten Filterlage - herausgenommenen als Randfilter ausgebildeten-Wirbelabscheider 6. Der Wirbelabscheider 6 besitzt zwei Reihen C-förmiger Elemente 12. In der vorderen Reihe liegen die "C" mit ihrem "Rücken" nach außen. Die "C-Elemente" der inneren Reihe greifen mit ihren Schenkeln in den konkaven Bereich der "C-Elemente" der vorderen Reihe ein.

Mit der Figur 6 wird der als Randfilter dienende Wirbelabscheider 6, der mit C-förmigen Elementen 12 ausgestattet ist, im Detail gezeigt. Die angesaugte Luft gelangt von unten her mittels einer Einströmöffnung 16 in einen Auffangkanal 17. Hier teilt sich dann der Luftstrom in einzelne Teilströme, die dann zwischen den C-förmigen Elementen 12 hindurchströmen, um sich danach wieder zu einem Luftstrom zu vereinigen. Die C-förmigen Elemente 12 sind auf einer Grundplatte 14 angeordnet. Die Grundplatte 14 und die C-förmigen Elemente 12 bilden eine Einheit, die spritztechnisch hergestellt wurde. Der Wirbelabscheider 6 ist im eingebauten Zustand an seiner Oberseite abgedeckt.

Der Randfilter 6 kann ausklappbar gestaltet sein. Es kann somit bei Bedarf ausgeklappt werden und stört im nicht benutzten Zustand nicht das Erscheinungsbild des Geräts.

Der Randfilter kann mit einer Verschlussvorrichtung (nicht dargestellt) versehen sein. Die Randabsaugung bzw. der Randfilter 6 kann bei Bedarf zugeschaltet werden. Es ergeben sich damit zwei Betriebszustände, zum einen Absaugung nur über die Filterlage 3 und zum anderen Absaugung über die Filterlage 3 und den Randfilter 6. Die Zu- und Abschaltung des Randfilters kann handbetätigt bzw, manuell und/oder automatisch bzw. motorisch bevorzugt über eine Klappe (nicht dargestellt) oder einen Schieber (nicht dargestellt), der stromauf oder stromab des Randfilters angeordnet sein kann, erfolgen.

Eine automatische Zu- und Abschaltung des Randfilters 6 kann von einer Sensorik bevorzugt in Abhängigkeit der zu reinigenden Luftmenge gesteuert werden.

Die Zu- und Abschaltbarkeit des Randfilters 6 kann automatisch erfolgen, bevorzugt indem eine federvorgespannte Klappe (nicht dargestellt) vorgesehen ist, die sich in Abhängigkeit der Druckdifferenz zwischen Außenseite der Filteranordnung (stromauf) und Unterdruckseite der Filteranordnung (stromab) bevorzugt in Abhängigkeit der gewählten Gebläsestufe selbsttätig öffnet und schließt. Eine derartige Klappe kann auch als Staudruckklappe bezeichnet werden.

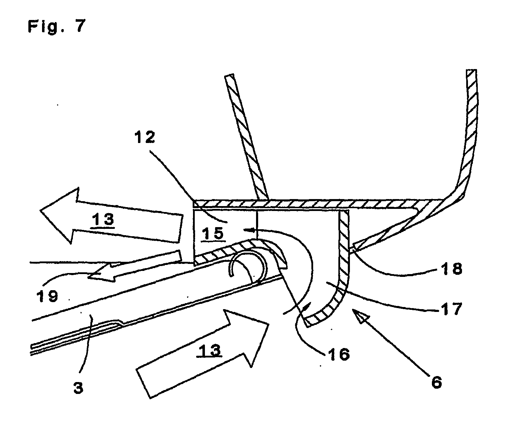

Zur weiteren Ergänzung ist mit der Figur 7 nun ein Querschnitt durch einen als Randfilter dienenden Wirbelabscheider 6 mit geschwungenen Elementen 12 gezeigt. Die angesaugte Luft 13 gelangt über die Einströmöffnung 16 in den Auffangkanal 17, wo sie wegen des großen Krümmungsradius' behutsam in Richtung Dunstabzugshauben-Mitte umgelenkt wird. Dabei durchströmt sie geschwungene Elemente 12, wobei Kondensat 19 abgeschieden wird. Die Elemente 12 sind hier zeichnerisch nicht geschnitten worden. Das Kondensat läuft wegen der geneigten Grundplatte 14 auf die Oberfläche der Filterlage 3, wo es aufgefangen und/oder gebunden wird. Gut kann man in dieser Darstellung sehen, dass die Grundplatte 14 zusammen mit einer über ihr angeordneten Platte des Dunstabzugshauben-Korpus', eine sich erweiternde Düse bildet. Der Wirbelabscheider 6 wird mittels einer Rastung 18 (Befestigungseinrichtung) am Dunstabzugshauben-Gehäuse gehalten. Wird diese Rastung 18 gelöst, so kann in diesem Ausführungsbeispiel der Wirbelabscheider 6 zusammen mit der Filterlage - die hier als Kassette ausgebildet ist- entnommen werden.

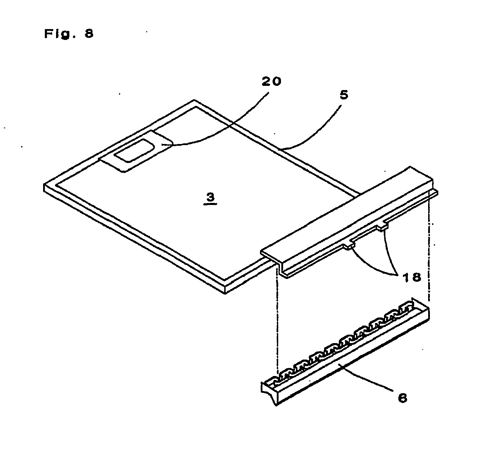

Die Figur 8 zeigt eine Filterlage 3 im ausgebauten Zustand, die als Filterkassette gestaltet ist. An der vorderen Kante ist der Wirbelabscheider 6 angeordnet. Oberhalb des Wirbelabscheiders 6 befindet sich ein Gegenstück, welches zusammen mit dem Wirbelabscheider 6 verspannt wird und dadurch am einem vorderen Teil des Rahmens 5 der Filterkassette fixiert ist. Eine Griffmulde 20 wurde konstruktiv in den hinteren Bereich der Filterkassette gelegt, damit sie nicht die Luftströmung stört und damit den Filterprozess beeinträchtigt.

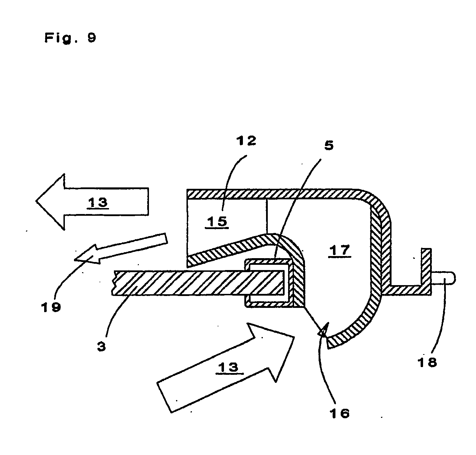

Die Figur 9 ist der Figur 7 sehr ähnlich, nur das in der Figur 9 die Filterlage 3 als Kassettenfilter ausgestaltet ist. Der Rahmen 5 der Filterkassette und der Wirbelabscheider 6 sind miteinander verspannt. Der Wirbelabscheider 6 weist an seiner rechten Außenseite eine Rastung 18 auf, mit der er am nicht dargestellten Gehäuse der Dunstabzugshaube 2 eingerastet werden kann.

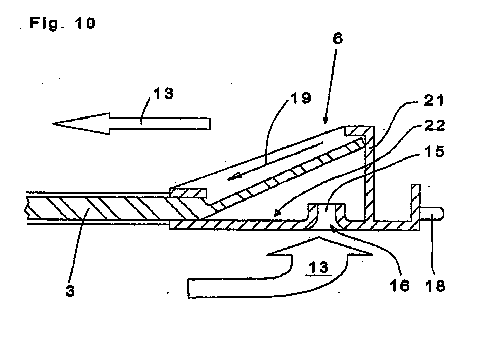

Mit den Figuren 10 bis 13 wird nun eine weitere konstruktive Lösung für einen Randfilter 6 erklärt. Es handelt sich hier um einen Randfilter 6 mit mindestens einer Streckmetall-Lage.

In der im Querschnitt dargestellten Figur 10 ist links eine Filterlage 3 mit einer regulären Lagenzahl zu sehen. Diese Lagen können verschiedene Streckmetall-Lagen, aber auch Kombinationen mit Papier- und/oder Vlies-Lagen sein. Wie die Schraffur andeutet, erstreckt sich die Filterlage 3 auch in den Bereich des Randfilters 6 hinein. Hier ist jedoch die Lagenzahl des Randfilters 6 gegenüber der Filterlage 3 reduziert und die hier wirksame Lage ist aus Streckmetall gefertigt. Diese Reduzierung der Lagen ist erforderlich, um den Strömungswiderstand im Bereich des Randfilters 6 gering zu halten. Auf der anderen Seite muss der Konstrukteur aber auch beachten, dass eine ausreichende Anzahl von Streckmetall-Gitterstäben vorhanden ist, damit Fett- und/oder Wassertröpfchen ausreichen umgelenkt werden und sich am dem Hindernis - welches ein Streckmetall-Gitterstab darstellt - niederschlagen können. Durch die Adhäsion bleibt dann zunächst das Kondensat im Bereich des Randfilters 6 am Streckmetall haften. Durch die dargestellte Neigung des Streckmetalls wandert das Kondensat 19 aber allmählich zur Filterlage 3 hin. Hier wird dann das Kondensat aufgesogen und/oder gebunden.

Der Randfilter 6 ist in einem Gehäuse 21 angeordnet. Dieses Gehäuse 21 ist in der Figur 10 einteilig und als Kunststoffspritzteil dargestellt. Im linken Bereich besitzt das Gehäuse 21 eine gabelförmige Klammer, mit der der aus Streckmetall ausgebildete Randfilter 6 auf der Filterlage 3 befestigt ist. Im rechten Bereich besitzt der Randfilter 6 eine Rastung 18, die an einem U-förmigen, federnden Teil angebracht ist. Von besonderer Bedeutung ist der untere Bereich des Randfilters 6. Hier ist eine runde Einströmöffnung 16 zu sehen. Weitere Einströmöffnungen 16 befinden sich hinter und vor der Schnittebene. Die Einströmöffnung 16 kann auch als sich über die gesamte Randseite erstreckender Schlitz ausgebildet sein. Damit die Einströmöffnung 16 einen geringen Strömungswiderstand aufweist, ist sie im Ansaugbereich ausgerundet. Aber die Einströmöffnung 16 erstreckt sich auch in den Raum unterhalb des Steckmetalles hinein. Dieser Raum wird auch Auffangraum 22 genannt. Dieser Auffangraum 22 hat den Vorteil, dass ein möglicherweise vom Streckmetall abtropfendes Kondensat nicht über die Einströmöffnung 16 nach unten ablaufen kann. Dieses würde die Hygiene im Kochbereich beeinträchtigen. Wenn sich in dem Auffangraum 22 Kondensat sammelt, so kann dieses Kondensat bei einem Betrieb der Dunstabzugshaube mit einem geringeren Kondensat-Aufkommen wieder verdunstet und mitgerissen werden. Sollte hier dann immer noch Kondensat vorhanden sein, so kann dieses beim Entnehmen des Wirbelabscheiders 6 - beispielsweise zu Reinigungszwecken - entleert werden.

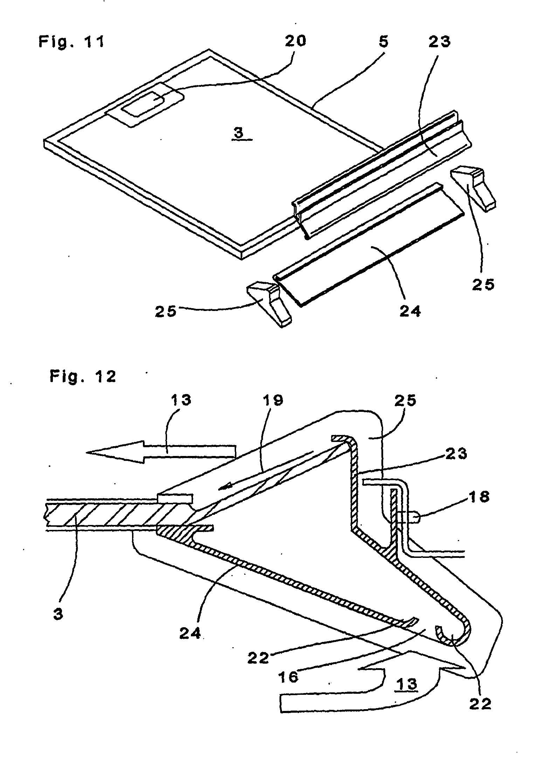

In den Figuren 11 und 12 ist der Randfilter 6 von zwei stranggepreßten Längsteilen aufgenommen. Ein Oberteil 23, ein Unterteil 24 und zwei Kappen 25 bilden ein Gehäuse für einen Randfilter 6, der wie in Figur 10 als verlängerter dünnlagiger Streckmetallfilter der Filterlage 3 ausgebildet ist. In der Figur 11 ist hierzu eine perspektivische Explosionszeichnung zu sehen. Im zusammengefügten Zustand hält der Randfilter 6 auch ohne weitere Befestigungsmittel beispielsweise an dem Rahmen 5 eines Kassettenfilters. Damit die Kappen 25 auf die Stirnseiten der Teile 23 und 24 gesteckt werden können, müssen auf den Seiten der Kappen 25, die den Teilen 23 und 24 zugewandt sind, entsprechende Schlitze vorhanden sein. Bei ausreichend enger Dimensionierung der Schlitze, kommt es zu guten Klemmkräften, weshalb der Randfilter 6 dann eine hohe mechanische Stabilität aufweist.

In der Figur 12 ist ein zusammengefügter Randfilter 6 im Querschnitt zu sehen. Das Oberteil 23, das Unterteil 24 und das Streckmetall des Randfilters 6 umfassen im wesentlichen den als Streckmetallfilter ausgebildeten Randfilter 6. Die eine Kappe 25 liegt hier hinter der Schnittebene. Die Teile 23 und 24 klemmen die Filterlage 3 und fixieren so den Randfilter 6 an der Filterlage 3. Die Einströmöffnung 16 wird durch das Zusammentreffen der unteren Enden der Teile 23 und 24 gebildet. Weil die Teile 23 und 24 Strangpreßteile sind, ist die Einströmöffnung 16 hier schlitzförmig. Durch die hochgezogenen unteren Ränder der Teile 23 und 24 entsteht aber nicht nur - wie bei Figur 10 schon gezeigt - eine Düse 15, sondern es entstehen auch zwei Auffangräume 22 für möglicherweise abtropfendes Kondensat.

Das Unterteil 24 ist nach außen hin geneigt dargestellt. Dadurch werden unter der Filterlage 3 einer Dunstabzugshaube 2 stauende Wrasen, daran gehindert, deren Absaugbereich zu verlassen. Vorteilhaft ist hier dann auch, dass die Einströmöffnung 16 diesen Staubereich zugewandt ist.

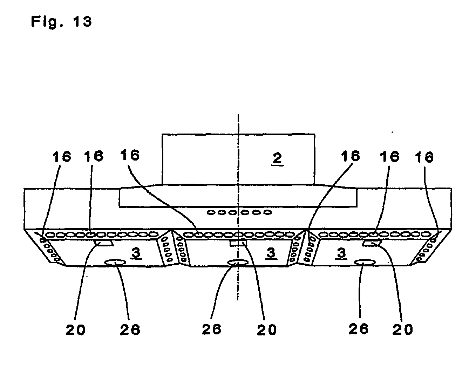

In der Figur 13 ist eine Dunstabzugshaube 2 mit drei nebeneinander angeordneten, pyramidenstumpf-förmigen Filterelementen zu sehen. Jedes dieser Filterelemente ist mit einer Filterlage 3 und einer Randabsaugung ausgerüstet. Diese Randabsaugung befindet sich zumindest in einem Teil der, seitlichen, abgeschrägten Bereiche des Pyramidenstumpfs. Hinter den Einströmöffnungen 16 ist mindestens eine Lage Streckmetall angeordnet und bildet so den Randfilter 6 aus. Das Streckmetall der Randbesaugung hat bevorzugt einen geringeren Strömungswiderstand als das Streckmetall mittigen Filterlage 3. Durch die hier realisierte Randabsaugung, in Verbindung mit der Nebeneinanderreihung, kommt es auch im mittleren Bereich einer Dunstabzugshaube, zu einer vorteilhaften großflächigen Besaugung. Bei einer Dunstabzugshaube mit einer großen Besaugungsfläche - wie in der Figur 13 dargestellt - kommt es zu einer vermehrten Kondensatbildung. Deshalb kann es dann vorteilhaft sein, wenn bei der gezeigten Dunstabzugshauben-Bauart, eine zusätzliche Auffangrinne für das Kondensat vorhanden ist. Durch die pyramidenstumpfförmige Ausbildung der Filteranordnung wird eine große Filterfläche zur Verfügung gestellt.

## Patentansprüche

1. Filteranordnung (1) für eine Dunstabzugshaube zum Abscheiden von Partikeln und/oder Flüssigkeitströpfchen aus der die Filteranordnung (1) durchströmenden Luft mit mindestens einer in einer Ebene angeordneten Filterlage (3) und einem in wenigstens einem Randabschnitt der Filterlage (3) angeordneten Randfilter (6), **dadurch gekennzeichnet, dass** der Randfilter (6) als Wirbelabscheider ausgebildet ist und einen geringeren Strömungswiderstand aufweist als die Filterlage (3) und dass der Randfilter (6) auf dem Randbereich (4) und bevorzugt senkrecht zur Ebene der Filterlage (3) derart angeordnet ist, dass im Randfilter (6) abgeschiedene Flüssigkeitströpfchen in den Randbereich (4) der Filterlage (3) fließen und dort aufgenommen werden.

2. Filteranordnung nach Anspruch 1, **dadurch gekennzeichnet, dass** der Randfilter (6) insbesondere als Wirbelstromfilter oder Baffelfilter ausgebildet ist, und dass der Wirbelabscheider (6) wenigstens eine Reihe, bevorzugt zwei hintereinander angeordnete Reihen, von Einrichtungen zur Ausbildung von Wirbeln in der den Randfilter (6) durchströmenden Luft hat.

3. Filteranordnung nach einem der Ansprüche 1 und 2, **dadurch gekennzeichnet, dass** der Randfilter (6) um den Randbereich (4) der Filterlage (3) umlaufend angeordnet ist.

4. Filteranordnung nach einem der Ansprüche 1 bis 3, **dadurch gekennzeichnet, dass** die Filterlage (3) eine oder mehrere Schichten aus Streckmetall und/oder Vlies und/oder Papier hat.

5. Filteranordnung nach einem der Ansprüche 1 bis 4, **dadurch gekennzeichnet, dass** die Filterlage (3) von einem U-förmigen Rahmen (5) eingefasst ist, der einen unteren Rahmenschenkel (11) und einen oberen Rahmenschenkel (10) hat, wobei der obere Rahmenschenkel (10) verlängert ausgebildet ist, um den Randfilter (6) aufzunehmen.

6. Filteranordnung nach Anspruch 5, **dadurch gekennzeichnet, dass** der Rahmen (5) im Bereich des auf ihm angeordneten Randfilter (6) Öffnungen (9) zum Ableiten der vom Randfilter (6) ablaufenden Flüssigkeit hat.

7. Filteranordnung nach Anspruch 5 oder 6, **dadurch gekennzeichnet, dass** die Filterlage (3) mit dem Randfilter (6) oder die Filterlage (3) mit dem Randfilter (6) und dem Rahmen (5) einen Kassettenfilter bildet.

8. Filteranordnung nach einem der Ansprüche 1 bis 7, **dadurch gekennzeichnet, dass** der Strömungswiderstand des Randfilters (6) geringer ist als der Strömungswiderstand der Filterlage (3) und der Randfilter (6) eine höhere Strömungsgeschwindigkeit zulässt als die Filterlage (3).

9. Filteranordnung nach einem der Ansprüche 1 bis 8, **dadurch gekennzeichnet, dass** auf dem Randfilter (6) ein Schirm angeordnet ist, der sich radial nach aussen über den Rand der Filteranordnung (1) erstreckt, um Wrasen und Dämpfe zur Filteranordnung (1), insbesondere zum Randfilter (6) hin zu leiten.

10. Filteranordnung nach einem der Ansprüche 1 bis 9, **dadurch gekennzeichnet, dass** die Filteranordnung (1) zum Abscheiden von Fett und Fetttröpfchen oder Wasser und Wassertröpfchen aus der die Filteranordnung (1) durchströmenden Luft verwendbar ist.

11. Filteranordnung nach einem der Ansprüche 1 bis 10, **dadurch gekennzeichnet, dass** der Randfilter (6) eine Reihe von X-förmige Wirbelelementen (7), bevorzugt zwei hintereinander angeordnete Reihen von X-förmige Wirbelelementen (7,8) hat, wobei gekrümmte Schenkel (7.1, 8.1) der X-förmige Wirbelelemente (7,8) unter Beibehaltung eines Luftspaltes ineinander greifen, so dass die X-förmige Wirbelelemente (7,8) quer durchströmt werden, wodurch sich dort Wirbel ausbilden, so dass die in der Luft enthaltenen Partikel und/oder Flüssigkeitströpfchen gegen eine Wand der Schenkel (7.1, 8. 1) geschleudert und abgeschieden werden.

12. Filteranordnung nach Anspruch 11, **dadurch gekennzeichnet, dass** die äußeren Schenkel der X-förmige Wirbelelemente (7) im äußeren Randbereich mit der Kante der Filterlage (3) oder des sie umlaufenden Rahmens (5) abschließen.

13. Filteranordnung nach Anspruch 11 oder 12, **dadurch gekennzeichnet, dass** die X-förmige Wirbelelemente (7,8) mit der Filterlage (3) und/oder des sie umlaufenden Rahmens (5), vorzugsweise mit dem Rahmenschenkel (10), verbunden bevorzugt verschraubt sind.

14. Filteranordnung nach einem der Ansprüche 2 oder 11, **dadurch gekennzeichnet, dass** der Wirbelabscheider (6) aus einer Anordnung von liegenden, geschwungenen Elementen (12) besteht, wobei die einströmende Luft (13) zunächst auf eine strömungstechnisch günstige Form der geschwungenen Elemente (12) trifft und dann in Verbindung mit mindestens einem weiteren geschwungenen Element (12), mindestens eine Umlenkung erfährt.

15. Filteranordnung nach Anspruch 14, **dadurch gekennzeichnet, dass** die geschwungenen Elemente (12) C-förmig gestaltet sind.

16. Filteranordnung nach Anspruch 14, **dadurch gekennzeichnet, dass** die geschwungenen Elemente (12) V-förmig gestaltet sind.

17. Filteranordnung nach Anspruch 14, **dadurch gekennzeichnet, dass** die geschwungenen Elemente (12) S-förmig gestaltet sind.

18. Filteranordnung nach Anspruch 14, **dadurch gekennzeichnet, dass** die geschwungenen Elemente (12) tropfenförmig gestaltet sind.

19. Filteranordnung nach Anspruch 14, **dadurch gekennzeichnet, dass** die geschwungenen Elemente (12) hantelförmig gestaltet sind.

20. Filteranordnung nach einem der Ansprüche 14 bis 19, **dadurch gekennzeichnet, dass**
die Anordnung der geschwungenen Elemente (12) aus einer Kombination von mindestens zwei verschiedenen Formen besteht.

21. Filteranordnung nach einem der Ansprüche 14 bis 20, **dadurch gekennzeichnet, dass** die geschwungenen Elemente (12) auf einer gemeinsamen Grundplatte (14) angeordnet sind.

22. Filteranordnung nach Anspruch 14 bis 21, **dadurch gekennzeichnet, dass** sich die Grundplatte (14) längs mindestens eines Randes der Filterlage (3) erstreckt.

23. Filteranordnung nach einem der Ansprüche 14 bis 22, **dadurch gekennzeichnet, dass** die Grundplatte (14) zur Filterlage (3) hin geneigt ist.

24. Filteranordnung nach einem der Ansprüche 14 bis 23, **dadurch gekennzeichnet, dass** oberhalb der geschwungenen Elemente (12) eine Platte angeordnet ist, die zusammen mit der Grundplatte (14) eine zur Filterlage (3) sich erweiternde Düse (15) bilden.

25. Filteranordnung nach einem der Ansprüche 14 bis 24, **dadurch gekennzeichnet, dass** der Randfilter (6) spritztechnisch hergestellt wird.

26. Filteranordnung nach Anspruch 25, **dadurch gekennzeichnet, dass** der Randfilter (6) aus Kunststoff hergestellt wird.

27. Filteranordnung nach Anspruch 25, **dadurch gekennzeichnet, dass** der Randfilter (6) aus Leichtmetall hergestellt wird.

28. Filteranordnung nach Anspruch 27, **dadurch gekennzeichnet, dass** der Randfilter (6) aus Aluminium hergestellt wird.

29. Filteranordnung nach einem der Ansprüche 14 bis 28, **dadurch gekennzeichnet, dass** der Randfilter (6) Teil des Rahmens (5) der Filterlage (3) ist.

30. Filteranordnung nach einem der Ansprüche 14 bis 28, **dadurch gekennzeichnet, dass** der Randfilter (6) Teil einer Dunstabzugshaube (2) ist.

31. Filteranordnung nach einem der Ansprüche 14 bis 30, **dadurch gekennzeichnet, dass** dem Randfilter (6) ein längs verlaufender Auffangkanal (17) zugeordnet ist, der eine nach unten gerichtete Einströmöffnung (16) aufweist.

32. Filteranordnung nach einem der Ansprüche 14 bis 31, **dadurch gekennzeichnet, dass** der Randfilter (6) ausklappbar gestaltet ist.

33. Filteranordnung nach einem der Ansprüche 14 bis 32, **dadurch gekennzeichnet, dass** der Randfilter (6) über eine Verschlussvorrichtung bevorzugt über einen Schieber oder eine Klappe zu- und abschaltbar gestaltet ist.

34. Filteranordnung nach Anspruch 33, **dadurch gekennzeichnet, dass** die Zu- und Abschaltbarkeit manuell erfolgt.

35. Filteranordnung nach Anspruch 33, **dadurch gekennzeichnet, dass** die Zu- und Abschaltbarkeit automatisch erfolgt, bevorzugt indem eine federvorgespannte Klappe vorgesehen ist, die sich in Abhängigkeit der Druckdifferenz zwischen Außenseite der Anordnung und Unterdruckseite bevorzugt in Abhängigkeit der gewählten Gebläsestufe selbsttätig öffnet und schließt.

36. Filteranordnung nach Anspruch 35, **dadurch gekennzeichnet, dass** das automatische Zu- und Abschalten von einer Sensorik bevorzugt in Abhängigkeit der zu reinigenden Luftmenge gesteuert wird.

37. Filteranordnung nach einem der Ansprüche 14 bis 36, **dadurch gekennzeichnet, dass** der Randfilter (6) leicht demontierbar ausgebildet ist.

38. Filteranordnung nach einem der Ansprüche 1 bis 37, **dadurch gekennzeichnet, dass** der Randfilter (6) aus einem zur Filterlage (3) hin geneigtem Streckmetall besteht.

39. Filteranordnung nach Anspruch 38, **dadurch gekennzeichnet, dass** das Streckmetall der Filterlage (3) und des Randfilters (6) einstückig oder geteilt ausgebildet ist.

40. Filteranordnung nach Anspruch 38 oder 39, **dadurch gekennzeichnet, dass** das Streckmetall des Randfilters (6) weniger Lagen aufweist als die Filterlage (3), um den Strömungswiderstand des Randfilters (6) zu verringern und die Randabsaugung zu erhöhen.

41. Filteranordnung nach einem der Ansprüche 38 bis 40, **dadurch gekennzeichnet, dass** der Randfilter (6) in einem Gehäuse (21) gehalten wird, wobei am Gehäuse (21) Befestigungselemente zur Befestigung der Filteranordnung an der Dunstabzugshaube vorgesehen sind.

42. Filteranordnung nach einem der Ansprüche 38 bis 40, **dadurch gekennzeichnet, dass** der Randfilter (6) von zwei Bauteilen (23,24) gehalten wird, welche bevorzugt im Strangpressverfahren hergestellt wurden.

43. Filteranordnung nach Anspruch 42, **dadurch gekennzeichnet, dass** die zwei Bauteile (23,24) stirnseitig mittels Kappen (25) gehalten werden.

44. Filteranordnung nach einem der Ansprüche 38 bis 43, **dadurch gekennzeichnet, dass** der Randfilter (6) an seiner Unterseite über mindestens eine, nach innen gestülpte Düse (15) verfügt.

45. Filteranordnung nach einem der Ansprüche 1 bis 44, **dadurch gekennzeichnet, dass** mehrere Filteranordnungen nebeneinander angeordnet sind.

46. Filteranordnung nach einem der Ansprüche 1 bis 45, **dadurch gekennzeichnet, dass** der Filteranordnung (1) mindestens ein Auffangraum (22) für das insbesondere im Randfilter (6) abgeschiedene Kondensat zugeordnet ist.

47. Filteranordnung nach einem der Ansprüche 1 bis 45, **dadurch gekennzeichnet, dass** die Filteranordnung als Quader oder als Pyramidenstumpf mit einer Unterseite und vier Randseiten ausgebildet ist, wobei an der Unterseite die Filterlage (3) und an wenigstens einer Randseite ein Randfilter (6) vorgesehen ist.

48. Dunstabzugshaube (2) mit einem Gehäuse, das eine Absaugöffnung hat, und einer Luftfördereinrichtung zum Absaugen von Luft über die Absaugöffnung, wobei die Absaugöffnung mit einer Filteranordnung (1) gemäß einem der vorstehenden Ansprüche 1 bis 47 versehen ist.

49. Filteranordnung (1) für eine Dunstabzugshaube zum Abscheiden von Partikeln und/oder Flüssigkeitströpfchen aus der die Filteranordnung (1) durchströmenden Luft mit mindestens einer in einer Ebene angeordneten Filterlage (3) und einem in wenigstens einem Randabschnitt der Filterlage (3) angeordneten Randfilter (6), **dadurch gekennzeichnet, dass** der Randfilter (6) als Wirbelabscheider ausgebildet ist und einen geringeren Strömungswiderstand aufweist als die Filterlage (3) und dass der Filteranordnung (1) mindestens ein Auffangraum (22) für das insbesondere im Randfilter (6) abgeschiedene Kondensat zugeordnet ist.

## Claims

1. Filter arrangement (1) for a fume extractor hood for separation of particles and/or liquid droplets from the air flowing through the filter arrangement (1), comprising at least one filter layer (3), which is arranged in a plane, and an edge filter (6) arranged at at least one edge section of the filter layer (3), **characterised in that** the edge filter (6) is constructed as a cyclone separator and has a lower flow resistance than the filter layer (3) and that the edge filter (6) is so arranged on the edge region (4) and preferably perpendicularly to the plane of the filter layer (3) that liquid droplets separated in the edge filter (6) flow into the edge region (4) of the filter layer (3) and are taken up there.

2. Filter arrangement according to claim 1, **characterised in that** the edge filter (6) is constructed particularly as a cyclonic flow filter or baffle filter and that the cyclone separator (6) has at least one row, preferably two rows arranged one behind the other, of devices for formation of cyclones in the air flowing through the edge filter.

3. Filter arrangement according to one of claims 1 and 2, **characterised in that** the edge filter is arranged to encircle the edge region (4) of the filter layer (3).

4. Filter arrangement according to any one of claims 1 to 3, **characterised in that** the filter layer (3) has one or more layers of expanded metal and/or non-woven material and/or paper.

5. Filter arrangement according to any one of claims 1 to 4, **characterised in that** the filter layer (3) is bounded by a U-shaped frame (5), which has a lower frame limb (11) and an upper frame limb (10), wherein the upper frame limb (10) is constructed to be prolonged in order to receive the edge filter (6).

6. Filter arrangement according to claim 5, **characterised in that** the frame (5) has in the region of the edge filter (6) arranged thereon openings (9) for conducting away the liquid running away from the edge filter (6).

7. Filter arrangement according to claim 5 or 6, **characterised in that** the filter layer (3) together with the edge filter (6) or the filter layer (3) together with the edge filter (6) and the frame (5) forms a cassette filter.

8. Filter arrangement according to any one of claims 1 to 7, **characterised in that** the flow resistance of the edge filter (6) is lower than the flow resistance of the filter layer (3) and the edge filter (6) allows a higher flow speed than the filter layer (3).

9. Filter arrangement according to any one of claims 1 to 8, **characterised in that** arranged on the edge filter (6) is a screen which extends radially outwardly beyond the edge of the filter arrangement (1) so as to conduct vapours and steam towards the filter arrangement (1), particularly towards the edge filter (6).

10. Filter arrangement according to any one of claims 1 to 9, **characterised in that** the filter arrangement (1) is usable for separation of fat and fat droplets or water and water droplets from the air flowing through the filter arrangement (1).

11. Filter arrangement according to any one of claims 1 to 10, **characterised in that** the edge filter (6) has a row X-shaped swirl elements (7), preferably two rows of X-shaped swirl elements (7, 8) arranged one behind the other, wherein curved limbs (7.1, 8.1) of the X-shaped swirl elements (7, 8) engage in one another while maintaining an air gap so that the X-shaped swirl elements (7, 8) are flowed through transversely, wherein cyclones form there so that the particles and/or liquid droplets contained in the air are centrifuged against a wall of the limbs (7.1, 8.1) and separated.

12. Filter arrangement according to claim 11, **characterised in that** the outer limbs of the X-shaped swirl elements (7) are flush in the outer edge region with the edge of the filter layer (3) or the frame (5) encircling it.

13. Filter arrangement according to claim 11 or 12, **characterised in that** the X-shaped swirl elements (7, 8) are connected, preferably screw-connected, with the filter layer (3) and/or the frame (5) encircling it, preferably with frame limb (10).

14. Filter arrangement according to one of claims 2 and 11, **characterised in that** the cyclone separator (6) consists of an arrangement of horizontal curved elements (12), wherein the inflowing air (13) initially impinges on a flow-promoting form of the curved elements (12) and then in conjunction with at least one further curved element (12) experiences at least one deflection.

15. Filter arrangement according to claim 14, **characterised in that** the curved elements (12) are formed to be C-shaped.

16. Filter arrangement according to claim 14, **characterised in that** the curved elements (12) are formed to be V-shaped.

17. Filter arrangement according to claim 14, **characterised in that** the curved elements (12) are formed to be S-shaped.

18. Filter arrangement according to claim 14, **characterised in that** the curved elements (12) are formed to be drop-shaped.

19. Filter arrangement according to claim 14, **characterised in that** the curved elements (12) are formed to be dumbbell-shaped.

20. Filter arrangement according to any one of claims 14 to 19, **characterised in that** the arrangement of the curved elements (12) consists of a combination of at least two different shapes.

21. Filter arrangement according to any one claims 14 to 20, **characterised in that** the curved elements (12) are arranged on a common base plate (14).

22. Filter arrangement according to any one of claims 14 to 21, **characterised in that** the base plate (14) extends along at least one edge of the filter layer (3).

23. Filter arrangement according to any one of claims 14 to 22, **characterised in that** the base plate (14) is inclined towards the filter layer (3).

24. Filter arrangement according to any one of claims 14 to 23, **characterised in that** arranged above the curved elements (12) is a plate which together with the base plate (14) forms a nozzle (15) widening towards the filter layer (3).

25. Filter arrangement according to any one of claims 14 to 24, **characterised in that** the edge filter (6) is produced by injection moulding.

26. Filter arrangement according to claim 25, **characterised in that** the edge filter (6) is produced from plastics material.

27. Filter arrangement according to claim 25, **characterised in that** the edge filter (6) is produced from light metal.

28. Filter arrangement according to claim 27, **characterised in that** the edge filter (6) is produced from aluminium.

29. Filter arrangement according to any one of claims 14 to 28, **characterised in that** the edge filter (6) is part of the frame (5) of the filter layer (3).

30. Filter arrangement according to any one of claims 14 to 28, **characterised in that** the edge filter (6) is part of a fume extractor hood (2).

31. Filter arrangement according to any one of claims 14 to 30, **characterised in that** a longitudinally extending collector channel (17) having a downwardly directed inflow opening (16) is associated with the edge filter (6).

32. Filter arrangement according to any one of claims 14 to 31, **characterised in that** the edge filter (6) is formed to be able to be unfolded.

33. Filter arrangement according to any one of claims 14 to 32, **characterised in that** edge filter (6) is formed to be connectible and disconnectible by way of a closure device, preferably by way of a slide or a flap.

34. Filter arrangement according to claim 33, **characterised in that** the connectibility and disconnectibility is carried out manually.

35. Filter arrangement according to claim 33, **characterised in that** the connectibility and disconnectibility is carried out automatically, preferably **in that** a spring-biased flap is provided which automatically opens and closes in dependence on the pressure difference between outer side of the arrangement and underpressure side, preferably in dependence on the selected fan stage.

36. Filter arrangement according to claim 35, **characterised in that** the automatic connecting and disconnecting is controlled by a sensor system, preferably in dependence on the air quantity to be cleaned.

37. Filter arrangement according to any one of claims 14 to 36, **characterised in that** the edge filter (6) is constructed to be easily demountable.

38. Filter arrangement according to any one of claims 1 to 37, **characterised in that** the edge filter (6) consists of an expanded metal inclined towards the filter layer (3).

39. Filter arrangement according to claim 38, **characterised in that** the expanded metal of the filter layer (3) and of the edge filter (6) is constructed to be integral or divided.

40. Filter arrangement according to claim 38 or 39, **characterised in that** the expanded metal of the edge filter (6) has fewer layers than the filter layer (3), so as to reduce the flow resistance of the edge filter (6) and increase the edge suction.

41. Filter arrangement according to any one of claims 38 to 40, **characterised in that** the edge filter (6) is retained in a housing (21), wherein fastening elements for fastening the filter arrangement to the fume extractor hood are provided at the housing (21).

42. Filter arrangement according to any one of claims 38 to 40, **characterised in that** the edge filter (6) is held by two components (23, 24) which were preferably produced by extruding.

43. Filter arrangement according to claim 42, **characterised in that** the two components (23, 24) are held at the end by means of flaps (25).

44. Filter arrangement according to any one of claims 38 to 43, **characterised in that** the edge filter (6) has at its underside at least one nozzle (15) turned-over inwardly.

45. Filter arrangement according to any one of claims 1 to 44, **characterised in that** several filter arrangements are arranged adjacent to one another.

46. Filter arrangement according to any one of claims 1 to 45, **characterised** at least one collecting space (22) for the condensates separated particularly in the edge filter (6) is associated with the filter arrangement (1).

47. Filter arrangement according to any one of claims 1 to 45, **characterised in that** the filter arrangement is constructed as a block or as a pyramidal frustum with an underside and four edge sides, wherein the filter layer (3) is provided at the underside and an edge filter (6) is provided at at least one edge side.

48. Fume extractor hood (2) comprising a housing, which has a suction opening, and an air conveying device for sucking up air via the suction opening, wherein the suction opening is provided with a filter arrangement (1) according to any one of the preceding claims 1 to 47.

49. Filter arrangement (1) for a fume extractor hood for separation of particles and/or liquid droplets from the air flowing through the filter arrangement (1), comprising at least one filter layer (3), which is arranged in a plane, and edge filter (6) arranged at least one edge section of the filter layer (3), **characterised in** the edge filter (6) is constructed as a cyclone separator and has a lower flow resistance than the filter layer (3) and that at least one collecting space (22) for the condensate separated particularly in the edge filter (6) is associated with the filter arrangement (1).

## Revendications

1. Dispositif filtrant (1) pour une hotte aspirante pour la séparation de particules et/ou de gouttelettes de liquide de l'air traversant le dispositif filtrant (1) avec au moins une couche filtrante (3) disposée dans un plan et un filtre périphérique (6) disposé dans au moins une partie périphérique de la couche filtrante (3), **caractérisé en ce que** le filtre périphérique (6) est conçu comme séparateur à turbulence et présente une résistance à l'écoulement plus faible que la couche filtrante (3) et **en ce que** le filtre périphérique (6) est disposé sur la zone périphérique (4) et de préférence perpendiculairement au plan de la couche filtrante (3), de telle sorte que des gouttelettes de liquide séparées dans le filtre périphérique (6) s'écoulent dans la zone périphérique (4) de la couche filtrante (3) et y sont réceptionnées.

2. Dispositif filtrant selon la revendication 1, **caractérisé en ce que** le filtre périphérique (6) est conçu en particulier sous forme de filtre à courant de Foucault ou de filtre à chicane, et **en ce que** le séparateur à turbulence (6) a au moins une rangée, de préférence deux rangées disposées l'une derrière l'autre, d'appareils pour la formation de tourbillons dans l'air traversant le filtre périphérique (6).

3. Dispositif filtrant selon l'une quelconque des revendications 1 et 2, **caractérisé en ce que** le filtre périphérique (6) est disposé tournant autour de la zone périphérique (4) de la couche filtrante (3).

4. Dispositif filtrant selon l'une quelconque des revendications 1 à 3, **caractérisé en ce que** la couche filtrante (3) a une ou plusieurs couches à base de métal étiré et/ou de non-tissé et/ou de papier.

5. Dispositif filtrant selon l'une quelconque des revendications 1 à 4, **caractérisé en ce que** la couche filtrante (3) est entourée par un cadre (5) en U, qui présente une branche de cadre (11) inférieure et une branche de cadre (10) supérieure, la branche de cadre (10) supérieure étant conçue allongée afin de réceptionner le filtre périphérique (6).

6. Dispositif filtrant selon la revendication 5, **caractérisé en ce que** le cadre (5) présente dans la zone du filtre périphérique (6) disposé sur lui des ouvertures (9) pour la déviation du liquide s'écoulant du filtre périphérique (6).

7. Dispositif filtrant selon la revendication 5 ou 6, **caractérisé en ce que** la couche filtrante (3) avec le filtre périphérique (6) ou la couche filtrante (3) avec le filtre périphérique (6) et le cadre (5) forme un filtre à cassette.

8. Dispositif filtrant selon l'une quelconque des revendications 1 à 7, **caractérisé en ce que** la résistance à l'écoulement du filtre périphérique (6) est plus faible que la résistance à l'écoulement de la couche filtrante (3) et le filtre périphérique (6) autorise une vitesse d'écoulement supérieure à la couche filtrante (3).

9. Dispositif filtrant selon l'une quelconque des revendications 1 à 8, **caractérisé en ce que** sur le filtre périphérique (6) est disposé un écran qui s'étend radialement vers l'extérieur sur le bord du dispositif filtrant (1), afin de diriger les buées et les vapeurs vers le dispositif filtrant (1), en particulier vers le filtre périphérique (6).

10. Dispositif filtrant selon l'une quelconque des revendications 1 à 9, **caractérisé en ce que** le dispositif filtrant (1) peut être utilisé pour la séparation de la graisse et de gouttelettes de graisse ou de l'eau et de gouttelettes d'eau de l'air traversant le dispositif filtrant (1).

11. Dispositif filtrant selon l'une quelconque des revendications 1 à 10, **caractérisé en ce que** le filtre périphérique (6) présente une rangée d'éléments à turbulence (7) en forme de X, de préférence deux rangées disposées l'une derrière l'autre d'éléments à turbulence (7, 8) en forme de X, des branches (7.1, 8.1) incurvées des éléments à turbulence (7, 8) en forme de X s'engageant les unes dans les autres en conservant une fente d'air, de sorte que les éléments à turbulence (7, 8) en forme de X sont traversés transversalement, ce qui entraîne la formation de tourbillons à cet endroit, de sorte que les particules et/ou gouttelettes de liquide contenues dans l'air sont projetées contre une paroi des branches (7.1, 8.1) et sont précipitées.

12. Dispositif filtrant selon la revendication 11, **caractérisé en ce que** les branches extérieures des éléments à turbulence (7) en forme de X se terminent dans la zone périphérique extérieure avec l'arête de la couche filtrante (3) ou du cadre (5) qui l'entoure.

13. Dispositif filtrant selon la revendication 11 ou 12, **caractérisé en ce que** les éléments à turbulence (7, 8) en forme de X sont reliés de préférence vissés avec la couche filtrante (3) et/ou le cadre (5) qui l'entoure, de préférence avec la branche de cadre (10).

14. Dispositif filtrant selon l'une quelconque des revendications 2 ou 11, **caractérisé en ce que** le séparateur à turbulence (6) se compose d'un agencement d'éléments (12) allongés et incurvés, l'air (13) arrivant d'abord sur une forme avantageuse au niveau de l'écoulement des éléments (12) incurvés et subissant ensuite en liaison avec au moins un autre élément (12) incurvé au moins une déviation.

15. Dispositif filtrant selon la revendication 14, **caractérisé en ce que** les éléments (12) incurvés sont conçus en forme de C.

16. Dispositif filtrant selon la revendication 14, **caractérisé en ce que** les éléments (12) incurvés sont conçus en forme de V.

17. Dispositif filtrant selon la revendication 14, **caractérisé en ce que** les éléments (12) incurvés sont conçus en forme de S.

18. Dispositif filtrant selon la revendication 14, **caractérisé en ce que** les éléments (12) incurvés sont conçus en forme de goutte.

19. Dispositif filtrant selon la revendication 14, **caractérisé en ce que** les éléments (12) incurvés sont conçus en forme d'haltère.

20. Dispositif filtrant selon l'une quelconque des revendications 14 à 19, **caractérisé en ce que** l'agencement des éléments (12) incurvés se compose d'une combinaison d'au moins deux formes différentes.

21. Dispositif filtrant selon l'une quelconque des revendications 14 à 20, **caractérisé en ce que** les éléments (12) incurvés sont disposés sur une plaque de base (14) commune.

22. Dispositif filtrant selon les revendications 14 à 21, **caractérisé en ce que** la plaque de base (14) s'étend le long d'au moins un bord de la couche filtrante (3).

23. Dispositif filtrant selon l'une quelconque des revendications 14 à 22, **caractérisé en ce que** la plaque de base (14) est inclinée en direction de la couche filtrante (3).

24. Dispositif filtrant selon l'une quelconque des revendications 14 à 23, **caractérisé en ce qu'**au-dessus des éléments (12) incurvés est disposée une plaque, qui forme conjointement avec la plaque de base (14) une buse (15) s'élargissant vers la couche filtrante (3).

25. Dispositif filtrant selon l'une quelconque des revendications 14 à 24, **caractérisé en ce que** le filtre périphérique (6) est fabriqué par injection.

26. Dispositif filtrant selon la revendication 25, **caractérisé en ce que** le filtre périphérique (6) est fabriqué en matière synthétique.

27. Dispositif filtrant selon la revendication 25, **caractérisé en ce que** le filtre périphérique (6) est fabriqué en métal léger.

28. Dispositif filtrant selon la revendication 27, **caractérisé en ce que** le filtre périphérique (6) est fabriqué en aluminium.

29. Dispositif filtrant selon l'une quelconque des revendications 14 à 28, **caractérisé en ce que** le filtre périphérique (6) fait partie du cadre (5) de la couche filtrante (3).

30. Dispositif filtrant selon l'une quelconque des revendications 14 à 28, **caractérisé en ce que** le filtre périphérique (6) fait partie d'une hotte aspirante (2).

31. Dispositif filtrant selon l'une quelconque des revendications 14 à 30, **caractérisé en ce qu'**au filtre périphérique (6) est attribué un canal collecteur (17) agencé dans le sens longitudinal, qui présente une ouverture d'entrée (16) dirigée vers le bas.

32. Dispositif filtrant selon l'une quelconque des revendications 14 à 31, **caractérisé en ce que** le filtre périphérique (6) est conçu escamotable.

33. Dispositif filtrant selon l'une quelconque des revendications 14 à 32, **caractérisé en ce que** le filtre périphérique (6) est conçu connectable et déconnectable au moyen d'un dispositif de fermeture, de préférence au moyen d'un robinet-vanne ou d'un clapet.

34. Dispositif filtrant selon la revendication 33, **caractérisé en ce que** la possibilité de connexion et de déconnexion s'effectue manuellement.

35. Dispositif filtrant selon la revendication 33, **caractérisé en ce que** la possibilité de connexion et de déconnexion s'effectue automatiquement, de préférence en prévoyant un clapet pré-tendu par ressort, qui s'ouvre et se ferme automatiquement en fonction de la différence de pression entre le côté extérieur du dispositif et le côté dépression de préférence en fonction du niveau de soufflerie choisi.

36. Dispositif filtrant selon la revendication 35, **caractérisé en ce que** la connexion et la déconnexion automatiques sont commandées par un capteur de préférence en fonction de la quantité d'air à nettoyer.

37. Dispositif filtrant selon l'une quelconque des revendications 14 à 36, **caractérisé en ce que** le filtre périphérique (6) est conçu de façon à pouvoir être démonté facilement.

38. Dispositif filtrant selon l'une quelconque des revendications 1 à 37, **caractérisé en ce que** le filtre périphérique (6) est à base d'un métal étiré incliné en direction de la couche filtrante (3).

39. Dispositif filtrant selon la revendication 38, **caractérisé en ce que** le métal étiré de la couche filtrante (3) et du filtre périphérique (6) est conçu d'une seule pièce ou divisé.

40. Dispositif filtrant selon la revendication 38 ou 39, **caractérisé en ce que** le métal étiré du filtre périphérique (6) présente moins de couches que la couche filtrante (3), afin de réduire la résistance à l'écoulement du filtre périphérique (6) et d'améliorer l'aspiration périphérique.

41. Dispositif filtrant selon l'une quelconque des revendications 38 à 40, **caractérisé en ce que** le filtre périphérique (6) est maintenu dans un boîtier (21), des éléments de fixation pour la fixation du dispositif filtrant sur la hotte aspirante étant prévus sur le boîtier (21).

42. Dispositif filtrant selon l'une quelconque des revendications 38 à 40, **caractérisé en ce que** le filtre périphérique (6) est maintenu par deux composants (23, 24), qui sont fabriqués de préférence dans le procédé d'extrusion.

43. Dispositif filtrant selon la revendication 42, **caractérisé en ce que** les deux composants (23, 24) sont maintenus côté avant au moyen de capuchons (25).

44. Dispositif filtrant selon l'une quelconque des revendications 38 à 43, **caractérisé en ce que** le filtre périphérique (6) dispose sur son côté inférieur d'au moins une buse (15) basculée vers l'intérieur.

45. Dispositif filtrant selon l'une quelconque des revendications 1 à 44, **caractérisé en ce que** plusieurs dispositifs filtrants sont disposés les uns à côté des autres.

46. Dispositif filtrant selon l'une quelconque des revendications 1 à 45, **caractérisé en ce qu'**au dispositif filtrant (1) est attribué au moins un espace collecteur (22) pour le condensat déposé en particulier dans le filtre périphérique (6).

47. Dispositif filtrant selon l'une quelconque des revendications 1 à 45, **caractérisé en ce que** le dispositif filtrant est conçu sous forme de parallélépipède ou de pyramide tronquée avec un côté inférieur et quatre côtés périphériques, la couche filtrante (3) étant prévu sur le côté inférieur et un filtre périphérique (6) étant prévu sur au moins un côté périphérique.

48. Hotte aspirante (2) comprenant un boîtier, qui a une ouverture d'aspiration, et un dispositif de transport d'air pour l'aspiration de l'air par l'ouverture d'aspiration, l'ouverture d'aspiration étant dotée d'un dispositif filtrant (1) selon l'une quelconque des revendications 1 à 47.

49. Dispositif filtrant (1) pour une hotte aspirante pour la séparation de particules et/ou de gouttelettes de liquide de l'air traversant le dispositif filtrant (1) avec au moins une couche filtrante (3) disposée dans un plan et un filtre périphérique (6) disposé dans au moins une partie périphérique de la couche filtrante (3), **caractérisé en ce que** le filtre périphérique (6) est conçu sous forme de séparateur à turbulence et présente une résistance à l'écoulement plus faible que la couche filtrante (3) et **en ce qu'**au dispositif filtrant (1) est relié au moins un espace collecteur (22) pour le condensat séparé en particulier dans le filtre périphérique (6).
